# EUROPEAN PATENT SPECIFICATION

(11) **EP 1 633 209 B1**
(45) Date of publication and mention of the grant of the patent: **26.08.2009**
(21) Application number: 04733339.8
(22) Date of filing: 17.05.2004
(51) Int. Cl.: A23L 2/00, A23L 1/09, A23L 1/30, A23L 1/308, A23L 1/29, A23F 3/16, A23C 9/13

(54) **WEIGHT MANAGEMENT BEVERAGE**
GETRÄNK ZUR GEWICHTSKONTROLLE
BOISSON PERMETTANT DE GERER SON POIDS

(30) Priority: 04.06.2003 US 475973 P
(43) Date of publication of application: 15.03.2006
(73) Proprietor: Nestec S.A., 1800 Vevey (CH)
(72) Inventor: FERRUZZI, Mario Department of Food Science, West Lafayette, IN 47907-2009 (US); CILLIERS, Johann, Marysville, OH 43040 (US); TUOT, James, Dublin, OH 43017 (US)
(74) Representative: Schuller, Cornelis
(86) International application number: PCT/EP2004/005272
(87) International publication number: WO 2004/110175

(56) References cited:
- WO-A-02/078469
- US-A1- 2002 132 780

## Description

### BACKGROUND ART

The present invention relates to a beverage that can be taken as a weight management aid as well as to promote general health of the consumer. The beverage of the invention can also assist weight management for improving insulin resistance syndrome conditions, and prevention of coronary artery disease and Type II Diabetes.

The beverage contains a mixture of components such as flavanols, stimulants, xylitol, calcium, and antioxidants providing multiple functionalities and which are combined to cooperate with each other providing superior effects and unexpected benefits compared to other combinations that do not include all components of the mixture. Specifically, this composition as formulated will serve to mitigate obesity by focusing on two fundamental nutritional concepts namely, (1) control of energy intake and (2) increase of energy expenditure.

Obesity is a significant health risk and linked to various types of degenerative diseases. Obesity and insulin resistance are often associated with hyperinsulinemia, glucose intolerance, hypertension, dyslipidemia, premature atherosclerosis, and increased risk for coronary artery disease and Type II Diabetes. This cluster of abnormalities is known as the insulin resistance syndrome (IRS) or the metabolic syndrome (syndrome X).

Obesity therefore has a negative weight related impact on mortality. In extreme or morbid obesity, the mortality rate may be 1200 percent above normal. Many overweight people attribute their obesity to overeating, lack of appetite control and/or lack of significant physical activity. Management of body weight is a complex phenomenon that generally varies according to nutritive equilibrium. The amount of energy introduced with intake of food and that used by the organism for maintenance of vital functions (metabolism, respiration, thermoregulation, movement etc.) determines energetic balance, which, if positive for long-term periods, inevitably leads to increased body weight and obesity.

Likewise, lifestyle modification in the form of caloric restriction and increased physical activity are the most common modalities used for treating obese individuals with IRS. A 5-7% weight reduction has been shown to reduce the risk for developing diabetes by 58% among subjects with IRS. (Knowler WC, Barrett-Connor E., Fowler SE, Hamman RF, Lachin JM, Walker EA, Nathan DM: Diabetes Prevention Program Research Group: Reduction in the incidence of type 2 diabetes with lifestyle intervention or metformin. N. Engl. J. Med. 346:393-403,2002, the content of which is incorporated herein by reference).

In the last few years it has been clearly shown that weight-control diets are not efficient by themselves. Also, the application of pharmaceuticals or chemicals to treat obesity has not been highly effective because they can exhibit significant and unpleasant side effects.

Some of the central problems associated with the control of body weight are the following:
a) Weight loss obtained by a low-calorie diet gives rise, as a defense mechanism, to an exacerbated attraction for food. Subsequently, temporary weight loss is frequently replaced by a fast and often uncontrolled weight increase.
b) Mobilization of fats from adipose deposits and their preferential use in metabolic processes occurs with difficulty and represents the hardest problem to face.

It is known that epigallocatechin gallate (EGCG), the main flavanol in green tea, can reduce food intake and cause loss of body weight (PCT application WO 01/60319).

PCT application WO 02/078469 recognizes that although certain ingredients, for example catechins and caffeine, can be used for the purpose of increasing energy and enhancing energy utilization, that products containing those ingredients tend to be highly sugared, and that the sugar can contribute to problems associated with excess blood glucose levels, rapid depletion thereof, initiation of an insulin response, and ultimate sparing/reducing fat oxidation.

In an effort to overcome the problems with prior weight management compositions, the present invention teaches a composition comprising (a) a polyol or a fiber, (b) at least one of each of a flavanol, stimulant and antioxidant, and (c) calcium which synergistically providing enhanced fat metabolism in mammalian systems and inhibits storage of fat. The compositions of the invention effectively modulate glucose in body systems, and thereby provide energy to body systems without resulting in storage of systemic fat.

Xylitol is a pentose sugar alcohol which has been shown to be a potentially important agent in dietary control. Shafer, et al. studied the effects of xylitol on gastric emptying of the solid-food component of a complex meal (Am. J. Clin. Nutr., 1987,45:744-747). After ingestion of 25 g xylitol, gastric emptying was markedly prolonged. They also showed that food intake after oral preloading of 25 g xylitol with water led to intake of 690 ± 45 kcal, as compared to 920 ± 60 Kcal for control, a 25% reduction in calories.

There is also evidence that xylitol is advantageous in serving as a sweetener suitable for diabetic applications because it contributes to a low glycemic index (*see*, U.S. Patent No. 5,204,115). Other advantages of xylitol include reduction or even elimination of dental carries (*see*, U.S. Patent No. 5,223,303 ).

Modern research has also shown that efficient weight management not only requires a reduction of the amount of energy introduced into the organism through the intake of fats and sugars (low-fat/low-calorie diets), but also the means of mobilizing the fat stored, that is, the use of substances with thermogenic action.

Dietary calcium has been shown to aid mobilization of fat stores as well as thermogenic output. Increasing dietary calcium results in modulation of 1,25-dihydroxyvitamin D which has demonstrated the ability to reduce fat mass in the absence of caloric restriction in mice. More interestingly, increased dietary calcium's reduction of 1,25-dihydroxyvitamin D levels results in significant reduction of fat mass and augmentation of weight and fat loss during periods of caloric restriction. This anti-obesity effect of dietary calcium and supporting human clinical and epidemiological evidence has been reviewed by Zemel (Journal of the American College of Nutrition, Vol. 21, No. 2,146S-151S [2002]). Thermogenesis is a metabolic process consisting of the production of heat by the organism, especially in the muscles and in the adipose tissues (specifically brown adipose tissue), using available fatty deposits as energy source. Elevated thermogenic output is favorable for maintenance of body weight even without significant variations in quantity of food intake. Levels of thermogenesis vary from individual to individual, in a genetically predetermined way and for this reason body weight also varies from individual to individual regardless of the energetic limits set by the diet.

Thermogenesis is a process managed by the adrenergic system, through beta-3-adrenergic receptors. Accordingly, thermogenic levels can be altered by adrenergic-like substances (adrenergic or sympathomimetic) such as, for instance, ephedrine, synephrine, amphetamine, phenylephrine etc. Adrenergic-like compounds are not very active alone in the activation of thermogenesis, and therefore, they are commonly used together with CNS stimulants, such as the methylxanthines: caffeine, theophylline and theobromine, which have a synergistic action with adrenergic substances.

The main problem associated with this approach consists of the fact that adrenergic substances produce significant side effects, particularly at cardiac-circulatory level, interacting with adrenergic receptors different from beta-3 receptors, and their administration is not recommended especially in hypertensive and borderline hypertensionpatients, and may lead to serious adverse reactions. Incidentally, many overweight individuals that would benefit from the stimulation of thermogenesis are also hypertensive. The concomitant use of hypotensive drugs is to be avoided in all cases of borderline hypertension, because of the development of rebound phenomena. Thus, it would be advantageous to have natural alternatives which avoid the side effects of the adrenergic substances that are used in weight control management.

Another problem resides in the fact that the use of thermogenic substances alone is not sufficient for an effective long-term management of body weight. The simultaneous administration of other active ingredients is therefore required. For example, one of the substances used in weight control is food fiber, which can provide some level of satiety as well as improving gastric emptying. However this supplement is sometimes administered separately since it can interfere with the absorption of other nutrients if they are administered together.

In summary, there is a need for a weight management method and composition targeting both energy expenditure and energy intake which is preferably derived from readily accessible sources. Diet and exercise are perhaps the most prescribed medical advice for weight control. A dietary equivalent to this concept of controlled energy intake and increased energy output now overcomes the disadvantages of prior compositions and is proposed in the present invention.

### SUMMARY OF THE INVENTION

The present invention now provides a composition that includes a combination of ingredients which provide (1) reduced caloric value, (2) increased theromogenic output, (3) metabolic regulation of fat mobilization and utilization, and (4) increased satiety, in order to achieve an ultimate goal of *in vivo* weight management and control.

The weight management beverage compositions and methods of the invention aid in weight maintenance by using at the same time ingredients, each providing a distinct and different functionality, and being clearly associated with a positive effect on weight management. This resulting multi hurdle approach displays a synergistic positive effect on weight management. The beverage compositions set forth herein include beverage concentrates, dry mixes as well as beverages in ready to drink form, allowing for use in a variety of settings.

These weight management beverage compositions comprise a polyol such as xylitol or a fiber, calcium, and at least one of each of a flavanol, stimulant and an antioxidant in cooperative amounts such that persons consuming the composition obtain increased energy expenditures and increased satiety thereby decreasing their desire for additional consumption thus assisting in overall weight management of the person.

The present compositions are used in various methods for weight management in a person, including for suppressing hunger or obtaining increased energy expenditures and increased satiety in a person to decrease their desire for additional consumption and thereby assist in their weight management. The compositions are also used for improving insulin resistance syndrome conditions by managing a person's weight. When the composition is a beverage concentrate and/or a dry mix, it can be reconstituted by mixing with, e.g., water or other liquids, prior to being consumed. Further, the composition can be fermented .

### DETAILED DESCRIPTION OF PREFERRED EMBODIMENT

The present invention is directed to compositions which are consumed in the form of a beverage, and which provide increased energy expenditure, prolonged gastric emptying time and satiety, thus contributing to a more desirable body weight for the consumer, while simultaneously maintaining the consumer's general health and well being.

The term "beverage" as used herein denotes a composition that is single-strength and ready to drink, that is, drinkable. As used herein, "beverage concentrate" refers to a concentrated liquid of the beverage which needs to be reconstituted by addition of a liquid such as water before it can be consumed. "Beverage mix" refers to a dry mix or dehydrated version of the beverage requiring reconstitution by addition of a liquid such as water prior to consumption.

As used herein, the term "tea materials" refers to teas which include materials obtained from the genus *Camellia* including *Camellia sinensis* and *Camellia assamica*, for instance, freshly gathered tea leaves, fresh tea leaves that are dried immediately after gathering, fresh tea leaves that have been heat treated before drying to inactivate any enzymes present, unfermented tea, fermented tea, instant green fermented tea, partially fermented tea leaves and aqueous extracts of these leaves. Tea materials are tea leaves, their extracts, tea plant stems and other plant materials which are related. Members of the genus *Phyllanthus, Catechu gambir* or *Uncaria* family of tea plants can also be used. Mixtures of unfermented, partially fermented and fermented, teas can be used.

As used herein, the term "tea solids" refers to solids extracted from tea materials. Tea materials used in the present composition may contain unoxidized, unpolymerized flavanols.

The present compositions comprise one or more flavanols. Flavanols utilized in all compositions of the present invention can be present as a component of green tea solids. Black tea, fruits, and other natural sources also contain these flavanols but to a lesser degree. Non-limiting examples of the most common flavanols which are extracted from tea plants and other members of the Catechu gambir family (Uncaria family) include, for example, catechins, which include catechin, epicatechin, gallocatechin, epigallocatechin, epicatechin gallate, and epigallocatechin gallate. Preferably, the flavanol used is ***epigallocatechin*** gallate ("EGCG").

Alternatively, these same flavanols may be prepared by synthetic or other appropriate chemical methods and incorporated into the present compositions. Flavanols, including catechin, epicatechin, and their derivatives are commercially available.

Amount of flavanols in beverage compositions of the present invention can vary. Preferably, the flavanol(s) is (are) present in an amount of from about 0.01% to about 0.75% and preferably 0.02 to 0.5% by weight of the composition. Wherein flavanols from green tea solids are utilized, preferably a per serving minimum of 30 - 200 mg EGCG by weight of the composition, more preferably a per serving minimum of 50 - 100 mg EGCG by weight of the finished beverage composition, is provided. Green tea solids are preferably present in an amount from about 0.15% to 10.0% and more preferably 0.25% to 5.0% by weight of the finished beverage composition. Final green tea solids level will depend on finished beverage form, ready to drink beverage, beverage concentrate, or dry beverage mix. Green tea solids compositions will vary depending on grade of tea, extraction method, and concentration technique. It is therefore required that tea solids be standardized according to EGCG and caffeine content prior to defining usage level. As a general guide, preferred final beverage compositions regardless of tea extract/powder source would maintain a green tea solids content equal to or greater than 1 fully extracted tea bag (gold standard of 2.27 g tea per bag brewed for five minutes at 85-90°C with gentle agitation) equivalent per 250 ml serving while maintaining palatability.

Alternatively or additionally, the present compositions comprise from about 1 milligram to about 400 milligrams of total flavanols per every 250 milliliters of a single strength liquid composition either in ready to drink for or prepared from reconstitution of a beverage concentrate or dry beverage mix. More preferably, the compositions comprise from about 10 milligrams to about 200 milligrams of total flavanol per every 250 milliliters of a single strength liquid composition. Most preferably, the compositions comprise from about 20 milligrams to about 120 milligrams of total flavanol per every 250 milliliters of a single strength liquid composition.

In all of the embodiments of the present invention, the total amount of flavanols includes any added flavanol as well as any flavanol inherently present in any other component of the present invention (e.g., green tea solids).

Without intending to be limited by theory, the present inventors have intended to combine the known stimulatory effects on thermogenic output of the flavanol component synergistically with the satiety and fat mobilization effects of the xylitol and/or fiber, and calcium components of the present composition to promote weight management while increasing antioxidant capacity to promote general health. Furthermore, the flavanol component interacts with other components to induce a glycemic response in a controlled matter to stabilize blood sugar, thus providing energy to the user without the need for certain high glycemic sugars such as sucrose and glucose. Accordingly, one or more flavanols will contribute to the onset, and particularly maintenance of energy wherein the composition is ingested.

The composition according to the present invention further comprises a stimulant which also promotes thermogenesis. As is commonly known in the art, stimulants can be obtained by extraction from a natural source or can be synthetically produced. Non-limiting examples of stimulants include methylxanthines, e.g., caffeine, theobromine, theophylline, capsinoids, capsaicinoids and lignans (sesamin, episesamin and sesamolin. Additionally, numerous other xanthine derivatives have been isolated or synthesized, which may be utilized as a stimulant in the compositions herein. See e.g., Bruns, Biochemical Pharmacology, Vol. 30, pp. 325-333 (1981). It is preferred that the natural sources of these materials be used. Preferably, a stimulant is present in an amount of from about 0.01 % to about 0.5% by weight of the composition.

The most preferred methylxanthine stimulant is caffeine. Caffeine may be obtained from the aforementioned plants and their waste or, alternatively, may be synthetically prepared. Preferred botanical sources of caffeine which may be utilized as a complete or partial source of caffeine include green tea solids, green tea extract, guarana, Yerba Mate' extract, black tea, cola nuts, cocoa, and coffee. As used herein, green tea solids, green tea extract, guarana, coffee, and Yerba Mate' extract are the most preferred botanical sources of caffeine, most preferably green tea solids, green tea extract and Yerba Mate' extract. Besides serving as a source of caffeine, green tea solids has the additional advantage of being a source of flavanols as discussed earlier. Yerba Mate' extract may have the additional benefit of an appetite suppressing effect and may be included for this purpose as well. The total amount of caffeine, in any embodiment of the present invention, includes the amount of caffeine naturally present in the tea solids, flavoring agent, botanical and any other components, as well as any added caffeine.

Preferably, caffeine is present in an amount of between about 0.01 and about 0.5%. More preferably, it is present in the amounts of between about 0.02 and about 0.3%. While the greater amounts provide greater stimulation, they also provide a less desirable taste to the beverage. This can be compensated for by the addition of an artificial sweetener so that the final taste of the beverage is palatable.

The present compositions include polyols such as xylitol (a pentose sugar alcohol), or fiber. Chemically, polyols are defined as polyhydric alcohols derived from carbohydrates by reduction of the aldehyde or ketone moiety to a primary or secondary hydroxyl group. (Administration of xylitol in effective amounts promotes satiety, and thus controls the appetite and/or reduces the food intake of said animal, e.g., mammal, at a meal or at snack time. This effect is considered to work in synergy with increased energy expenditure (thermogenesis) to promote weight maintenance/loss. It further reduces caloric value and lowers the glycemic index of the beverage compared to one which includes a non sugar alcohol carbohydrate such as glucose or sucrose.

Preferably, xylitol is present in an amount of from about 1% to about 90%, preferably from about 2 to 85%, and more preferably from about 3 to 83% by weight of the composition. Thus, the weight management beverage according to the present invention when formulated with xylitol provides 40-60% fewer calories than a product sweetened by pure sucrose, and is better suited for diabetic consumption due to its reduced glycemic index. While xylitol is preferentially utilized other polyols including, sorbitol, erythritol, mannitol and lactitol may be utilized.

Fiber may also be used for satiety and modulating gastric emptying in cases where polyol application is not practical for technical reasons. This specific functionality can be found in fibers such Inulin, Fructooliogosaccharides, Polydextrose, and/or derivatized Maltodextrin, and resistant starches or blends thereof. Typical functional concentration would be from 1g up to 30 g per serving.

A significant dietary source of calcium is included in the ready-to-drink beverage, beverage concentrates, and beverage mixes of the present invention. It serves in a number of functions including its role as an enhancer of the thermogenic effect provided by the flavanol and stimulant mentioned above. However, more critically, dietary calcium has been shown to aid mobilization and utilization of fat stores (especially visceral adipose tissue). Increasing dietary calcium results in a reduction of circulating 1,25-dihydroxyvitamin D levels which leads to a significant reduction of fat mass and augmentation of weight and fat loss during periods of caloric restriction. These observations are critically important to weight loss and management. These anti-obesity effects of dietary calcium and supporting human clinical and epidemiological evidence has been reviewed by Zemel (Journal of the American College of Nutrition, Vol. 21, No. 2,146S-151 S [2002]).

Preferred sources of calcium include, for example, milk calcium, calcium-citrate-lactate, amino acid chelated calcium, calcium carbonate, calcium oxide, calcium hydroxide, calcium sulfate, calcium chloride, calcium phosphate, calcium hydrogen phosphate, calcium dihydrogen phosphate, calcium citrate, calcium malate, calcium tartrate, calcium gluconate, calcium realate, calcium tantrate, and calcium lactate, and in particular calcium citrate-malate. The form of calcium citrate-lactate is described in Jacobson et al. US Pat. No. 6,036,985. The form of calcium citrate-malate is described in, e.g., U.S. Pats. No. 5,670,344 or 5,612,026. Preferred compositions of the present invention will comprise from about 0.01 % to about 15.0%, more preferably from about 0.1 to 12%, and most preferably from about 0.5% to about 10.0% of calcium, by weight of the product.

The present beverage may be also be a fermented beverage according to known standards of one skilled in the art.

The present beverage further comprises at least one antioxidant. The antioxidant can be a vitamin such as Vitamin C, retinol palmitate, bisbentiamine, riboflavine, pyridoxine hydrochloride, cyanocobalamin, sodium ascorbate, cholecalciferol, nicotinamide, calcium pantothenate, folic acid, biotin, choline bitartarate and so on. Among these vitamins, vitamin C is particularly desirable and is preferred.

As used herein, "vitamin C" is inclusive of one or more of L-ascorbic acid (also referred to herein as ascorbic acid), as well as their bioequivalent forms including salts and esters thereof. For example, the sodium salt of ascorbic acid is considered vitamin C herein. Additionally, there are many widely known esters of vitamin C, including ascorbyl acetate. Fatty acid esters of vitamin C are lipid soluble and can provide an antioxidative effect.

The vitamin C utilized may be in any form, for example, free or in encapsulated form. It is highly preferred herein to utilize free vitamin C, for example, as ascorbic acid.

Preferably, the compositions of the present invention will comprise from about 0.01 % to about 1 %, more preferably 0.05% to about 0.5%, and most preferably from about 0.1% to about 0.5% of vitamin C, by weight of the product.

The compositions of the present invention may further comprise additional optional components to enhance, for example, their performance in promoting thermogenesis, providing organoleptic properties, and nutritional profile. For example, one or more acidulants, coloring agents, low-caloric sweeteners, flavoring agents, preservatives, emulsifiers, oils, carbonation components, and the like may be included in the compositions herein. Such optional components may be dispersed, solubilized, or otherwise mixed into the present compositions. These components may be added to the compositions herein provided they do not substantially hinder the properties of the beverage composition, particularly the provision of energy and mental alertness. Non-limiting examples of optional components suitable for use herein are given below.

The present compositions may optionally but preferably further comprise one or more acidulants. An amount of an acidulant may be used to maintain the pH of the composition. Compositions of the present invention preferably have a pH of from about 2 to about 8, more preferably from about 2 to about 5, even more preferably from about 2 to about 4.5, and most preferably from about 2.7 to about 4.2. Beverage acidity can be adjusted to and maintained within the requisite range by known and conventional methods, e.g., the use of one or more acidulants. Typically, acidity within the above recited ranges is a balance between maximum acidity for microbial inhibition and optimum acidity for the desired beverage flavor.

Organic as well as inorganic edible acids may be used to adjust the pH of the beverage. The acids can be present in their undissociated form or, alternatively, as their respective salts, for example, potassium or sodium hydrogen phosphate, potassium or sodium dihydrogen phosphate salts. The preferred acids are edible organic acids which include citric acid, phosphoric acid, malic acid, fumaric acid, adipic acid, gluconic acid, tartaric acid, ascorbic acid, acetic acid, phosphoric acid or mixtures thereof. The most preferred acids are citric and phosphoric acids. Preferably, citric acid and phosphoric acid are present in the amount of from about 0.05% to about 0.5% and from about 0.005% to about 0.05 %, respectively. More preferably, citric acid and phosphoric acid are present in the amount of from about 0.125% to about 0.35% and from about 0.01% to about 0.03 %, respectively.

The acidulant can also serve as an antioxidant or metal chelating agent to stabilize beverage components. Examples of commonly used antioxidant include but are not limited to ascorbic acid, EDTA (ethylenediaminetetraacetic acid), and salts thereof.

Small amounts of one or more coloring agents may be utilized in the compositions of the present invention. Beta-carotene is preferably used. Riboflavin and FD&C dyes (e.g., yellow #5, blue #2,red #40) and/or FD&C lakes may also be used. By adding the lakes to the other powdered ingredients, all the particles, in particular the colored iron compound, are completely and uniformly colored and a uniformly colored beverage mix is attained. Additionally, a mixture of FD&C dyes or a FD&C lake dye in combination with other conventional food and food colorants may be used. Additionally, other natural coloring agents may be utilized including, for example, chlorophylls and chlorophyllins, as well as fruit, vegetable, and/or plant extracts such as grape, black currant, aronia, carrot, beetroot, red cabbage, and hibiscus. Natural colorants are preferred for "all natural" drink products.

The amount of coloring agent used will vary, depending on the agents used and the color intensity desired in the finished product. The amount can be readily determined by one of ordinary skill in the art. Generally, if utilized, the coloring agent should be present at a level of from about 0.0001% to about 0.5%, preferably from about 0.001% to about 0.1%, and most preferably from about 0.004% to about 0.1%, by weight of the composition.

A sweetener suitable for diabetic applications is one which has a glycemic index of less than 50 based upon comparative blood glucose response relative to glucose ingestion. See Jenkins et al., "Glycemic Index of Foods: A Physiological Basis for Carbohydrate Exchange", 34 The American Journal of Clinical Nutrition, 362 (March 1982) for methodology. To achieve these values, when one or more low-caloric sweeteners are utilized herein, the total low-caloric sweetener is preferably utilized at levels from about 0.0001 % to about 5%, more preferably from about 0.001% to about 3%, still more preferably from about 0.005% to about 2%, even more preferably from about 0.01% to about 1%, and most preferably from about 0.01 % to about 0.05%, by weight of the composition.

One or more flavoring agents are recommended for the present invention in order to enhance their palatability. Any natural or synthetic flavor agent can be used in the present invention. For example, one or more botanical and/or fruit flavors may be utilized herein. As used herein, such flavors may be synthetic or natural flavors.

Particularly preferred fruit flavors are exotic and lactonic flavors such as, for example, passion fruit flavors, mango flavors, pineapple flavors, cupuacu flavors, guava flavors, cocoa flavors, papaya flavors, peach flavors, and apricot flavors. Besides these flavors, a variety of other fruit flavors can be utilized such as, for example, apple flavors, citrus flavors, grape flavors, raspberry flavors, cranberry flavors, cherry flavors, and the like. These fruit flavors can be derived from natural sources such as fruit juices and flavor oils, or may alternatively be synthetically prepared. The natural flavorants are preferred for "all natural" drinks.

Preferred botanical flavors include, for example, aloe vera, guarana, ginseng, ginkgo, hawthorn, hibiscus, rose hips, chamomile, peppermint, fennel, ginger, licorice, lotus seed, schizandra, saw palmetto, sarsaparilla, safflower, St. John's Wort, curcuma, cardimom, nutmeg, cassia bark, buchu, cinnamon, jasmine, haw, chrysanthemum, water chestnut, sugar cane, lychee, bamboo shoots, vanilla, coffee, and the like. Preferred among these is guarana, ginseng, ginko. Besides serving as sources of stimulants, tea extracts and coffee can also be used as a flavoring agent. In particular, the combination of tea flavors, preferably green tea or black tea flavors (preferably green tea), optionally together with fruit flavors has an appealing taste.

The flavor agent can also comprise a blend of various flavors. If desired, the flavor in the flavoring agent may be formed into emulsion droplets which are then dispersed in the beverage composition or concentrate. Because these droplets usually have a specific gravity less than that of water and would therefore form a separate phase, weighting agents (which can also act as clouding agents) can be used to keep the emulsion droplets dispersed in the beverage composition or concentrate. Examples of such weighting agents are brominated vegetable oils (BVO) and resin esters, in particular the ester gums. See L. F. Green, Developments in Soft Drinks Technology, Vol. 1, Applied Science Publishers Ltd., pp. 87-93 (1978) for a further description of the use of weighting and clouding agents in liquid beverages. Typically the flavoring agents are conventionally available as concentrates or extracts or in the form of synthetically produced flavoring esters, alcohols, aldehydes, terpenes, sesquiterpenes, and the like.

Optionally, one or more preservatives may additionally be utilized herein. Preferred preservatives include, for example, sorbate, benzoate, and polyphosphate preservatives. Preferably, wherein a preservative is utilized herein, one or more sorbate or benzoate preservatives (or mixtures thereof) are utilized. Sorbate and benzoate preservatives suitable for use in the present invention include sorbic acid, benzoic acid, and salts thereof, including (but not limited to) calcium sorbate, sodium sorbate, potassium sorbate, calcium benzoate, sodium benzoate, potassium benzoate, and mixtures thereof. Sorbate preservatives are particularly preferred. Potassium sorbate is particularly preferred for use in this invention.

Wherein a composition comprises a preservative, the preservative is preferably included at levels from about 0.0005% to about 0.5%, more preferably from about 0.001% to about 0.4% of the preservative, still more preferably from about 0.001 % to about 0.1%, even more preferably from about 0.001% to about 0.05%, and most preferably from about 0.003% to about 0.03% of the preservative, by weight of the composition. Wherein the composition comprises a mixture of one or more preservatives, the total concentration of such preservatives is preferably maintained within these ranges.

The amount of water utilized in the present beverage compositions is such that it is suitable as a dilute, ready-to-drink beverage. Typically, the present beverages or beverage compositions comprise at least 60% to about 97% water, more preferably at least about 75% water, even more preferably at least about 80% water, and most preferably at least about 83% water.

The inventive beverage compositions may be provided in the form of a dry mix or dehydrated version. These dry mixes may be obtained by spray drying or freeze drying of the liquid beverages prior to packaging or by uniform blending or agglomeration of dry ingredients. When the beverage is to be prepared for consumption, it simply can be reconstituted by the addition of a liquid such as water.

The present invention may also be packaged in the form of a concentrate. These beverage concentrates according to the present invention may be provided as, for example, a syrup and/or an aqueous concentrate. The beverage concentrate is typically formulated to provide a drinkable beverage composition when the concentrate is reconstituted or diluted with water or other aqueous fluid or liquid.

The amount of water utilized in the present beverage concentrates is such that it is suitable as a concentrate, typically in the form of a syrup or aqueous concentrate, which is ready-to-drink upon further dilution with water or other aqueous liquid. Typically, the present beverage concentrates comprise from 20% to 85% water, preferably from about 20% to about 50% water, and most preferably from about 20% to about 40% water.

The beverage concentrates are particularly useful as they may be transported and stored more conveniently than the final beverage product due to the lesser content of water therein. After reconstitution, these beverages provide maintained energy to the consumer without rapid and transient peaks of glucose levels in the blood.

The present compositions are made according to methods which will be well known by the ordinarily skilled artisan. For convenience, non-limiting examples of methods of making follow.

To illustrate, the compositions of the present invention may be prepared by dissolving, dispersing, or otherwise mixing all components singularly or in suitable combinations together and in water where appropriate, agitating with a mechanical stirrer until all of the ingredients have been solubilized or adequately dispersed. Where appropriate, all separate solutions and dispersions may then be combined. When using tea extracts which typically are pH sensitive, it is important to adjust the desired pH with an acidulant and/or buffer system before adding the tea extracts to the mixture. Wherein a shelf stable composition is desired, the final mixture can optionally, but preferably, be either preserved, pasteurized, ultra-pasteurized, sterilized or filled aseptically at appropriate process conditions.

In making a beverage composition, a beverage concentrate may optionally be formed first. One method to prepare the concentrate form of the beverage composition would be to start with less than the required volume of water that is used in the preparation of the beverage composition. Another method would be to partially dehydrate the finally prepared beverage compositions to remove only a portion of the water and any other volatile liquids present. Dehydration may be accomplished in accordance with well known procedures, such as evaporation under vacuum. The concentrate can be in the form of a relatively thick liquid. A syrup is typically formed by adding suitable ingredients such as electrolytes or emulsions to the beverage concentrate. The syrup is then mixed with water or another aqueous fluid to form a finished beverage or finished beverage concentrate. The weight ratio of water to syrup is typically from about 1:1 to about 5:1.

The final beverage is bottled or packaged in single serve containers, either in bottles, cans, or Tetrabriks. Preferably, PET or glass bottles are appropriately sterilized before being filled by the pasteurized, ultrapasteurized or sterilized beverage. Beverage concentrates and beverage concentrates would be packaged in both single serve multiple serve containers of the same make.

In addition to the beverage described above, the core functional ingredients may potentially be applied to other beverage bases such as coffee, juice, milk soy and general flavored beverages.

### EXAMPLES

The following non-limiting examples of the present composition are prepared utilizing conventional methods. The following examples are provided to illustrate the invention and are not intended to limit its scope in any manner.

### Example 1

A low acid formulation beverage composition is prepared by combining the following components in a conventional manner:

| Component | Wt. % |
|---|---|
| Green Tea Powder | 0.32 |
| Caffeine | 0.01 |
| Xylitol | 7.0 |
| Calcium Salt | 0.9 |
| Ascorbic Acid | 0.06 |
| Flavor | 0.03 |
| Water | balance |
| | |
| Total | 100 |

### Example 2

A low acid formulation beverage composition is prepared by combining the following components in a conventional manner:

| Component | Wt. % |
|---|---|
| | |
| Green Tea Powder | 0.30 |
| Black Tea Powder | 0.10 |
| Caffeine | 0.015 |
| Xylitol | 8.0 |
| Calcium Salt | 0.90 |
| Ascorbic Acid | 0.06 |
| Flavor | 0.03 |
| Water | balance |
| | |
| Total | 100 |

### Example 3

A high acid formulation beverage composition is prepared by combining the following components in a conventional manner:

| Component | Wt. % |
|---|---|
| | |
| Green Tea Powder | 0.29 |
| Caffeine | 0.03 |
| Xylitol | 5.0 |
| Calcium Salt | 0.60 |
| Ascorbic Acid | 0.06 |
| Citric Acid | 0.15 |
| Flavor | 0.05 |
| Water | balance |
| | |
| Total | 100 |

### Example 4

A high acid formulation beverage composition is prepared by combining the following components in a conventional manner:

| Component | Wt. % |
|---|---|
| | |
| Green Tea Powder | 0.30 |
| Black Tea Powder | 0.09 |
| Caffeine | 0.04 |
| Xylitol | 6.5 |
| Calcium Salt | 0.72 |
| Ascorbic Acid | 0.06 |
| Citric Acid | 0.15 |
| Flavor | 0.15 |
| Water | balance |
| | |
| Total | 100 |

### Example 5

A milk formulation composition is prepared by combining the following components in a conventional manner:

| Component | Wt. % |
|---|---|
| | |
| Green Tea Powder | 0.45 |
| Caffeine | 0.04 |
| Xylitol | 5.0 |
| Ascorbic Acid | 0.04 |
| Flavor | 0.10 |
| Non Fat Dry Milk | 5.5 |
| Water | balance |
| | |
| Total | 100 |

### Example 6

A liquid beverage concentrate is prepared by combining the following components in a conventional manner:

| Component | Wt.% |
|---|---|
| | |
| Green Tea Powder | 2.30 |
| Caffeine | 0.40 |
| Xylitol | 50.0 |
| Calcium Salt | 8.00 |
| Ascorbic Acid | 0.60 |
| Flavor | 0.40 |
| Water | balance |
| | |
| Total | 100 |

### Example 7

A beverage dry mix is prepared by blending the following components in a conventional manner:

| Component | Wt. % |
|---|---|
| | |
| Green Tea Powder | 5.00 |
| Caffeine | 0.40 |
| Xylitol | 78.00 |
| Calcium Salt | 12.80 |
| Ascorbic Acid | 0.50 |
| Flavor | 0.30 |
| Flow agent | 2.00 |
| Total | 100 |

### Example 8

A liquid beverage concentrate is prepared by combining the following components in a conventional manner:

| Component | Wt. % |
|---|---|
| | |
| Green Tea Powder | 0.35 |
| Caffeine | 0.04 |
| Fibersol-2 (Soluble fiber) | 3.00 |
| Calcium Salt | 0.40 |
| Ascorbic Acid | 0.03 |
| Acesulfame-K | 0.03 |
| Sucralose | 0.05 |
| Flavor | 0.10 |
| Water | balance |
| | |
| Total | 100 |

Beverages of Examples 1-8 were found to be palatable and filling. Consumers of these beverages found that their desire to eat was curtailed but without a reduction of energy necessary to perform their daily activities. Also, the components used in these beverages were found to be more accepted compared to prior art beverages that contain appetite suppressant drugs or similar non-natural ingredients.

## Claims

1. A weight management beverage composition, comprising a polyol or a fiber or a combination thereof, calcium, and at least one of each of a flavanol, stimulant and antioxidant, in cooperative amounts such that persons consuming the composition obtain increased energy expenditures and increased satiety to decrease their desire for additional consumption and thereby assist in weight management of the person.

2. The composition according to claim 1, wherein the polyol is xylitol present in an amount of from about 1% to about 90% by weight of the composition; the fiber is present in an amount of from 0.1 to 30 g; the flavanol is present in an amount of about 0.01 % to about 0.75% by weight of composition; and the stimulant is present in an amount of from about 0.01 % to about 0.5% by weight of the composition.

3. The composition according to claim 1, wherein the antioxidant is vitamin C.

4. The composition according to claim 3, wherein vitamin C is present in an amount of from about 0.01% to about 1% by weight of the composition.

5. The composition according to claim 1, wherein the flavanol is present as a component of green tea solids.

6. The composition according to claim 1, wherein the flavanol is s catechin, epicatechin, gallocatechin, epigallocatechin, epicatechin gallate, or epigallocatechin gallate or mix thereof.

7. The composition according to claim 1, wherein the stimulant is caffeine.

8. The composition according to claim 1, wherein calcium is present in an amount of from about 0.01 % to about 15% by weight of the composition.

9. The composition according to claim 1, further comprising one or more acidulants; coloring agents; non-caloric sweeteners; flavoring agents; or preservatives.

10. The composition according to claim 9, which includes an acidulant of citric acid, phosphoric acid, malic acid, fumaric acid, adipic acid, gluconic acid, tartaric acid, ascorbic acid, acetic acid, phosphoric acid or mixtures thereof; and a coloring agent of beta-carotene.

11. The composition according to claim 10, which includes an acidulant mixture of citric acid and phosphoric acid which are present in an amount of from about 0.1 % to about 0.5% and from about 0.01% to about 0.05 %, respectively; and beta-carotene present in an amount of about 0.005% to about 0.02%.

12. The composition according to claim 1 further comprising water in an amount of above 60% to about 97% by weight of the composition.

13. The composition according to claim 1, in the form of a concentrate that contains between 20% and 80% water, wherein a beverage can be made by combining the concentrate with an aqueous fluid.

14. The composition according to claim 1, in the form of a beverage dry mix or an agglomerated powder that contains between 1 and 10% water, wherein a beverage can be made by combining the dry mix or agglomerate with an aqueous fluid.

15. A ready to drink weight management beverage composition according to claim 1, specifically comprising:
green tea solids in an amount of about 0.05% to about 0.75% by weight of composition;
caffeine in an amount of from about 0.01% to about 0.25% by weight of the composition;
xylitol in an amount of from about 1% to about 15% by weight of the composition, or fiber in an amount of from 1% to 3%, or a combination thereof;
calcium in an amount of from about 0.01% to about 1% by weight of the composition; an antioxidant vitamin in an amount of from about 0.01 % to about 1% by weight of the composition; and
water in an amount of from about 20 % to about 97% by weight of the composition, such that persons consuming the composition obtain increased energy expenditures and increased satiety to decrease their desire for additional consumption and thereby assist in weight management of the person.

16. A weight management liquid beverage concentrate composition according to claim 1, specifically comprising:
green tea solids in an amount of about 1% to about 5% by weight of composition;
caffeine in an amount of from about 0.01% to about 0.4% by weight of the composition;
xylitol in an amount of from about 1% to about 50% by weight of the composition, or fiber in an amount of from about 1% to 20% of the composition, or a combination thereof;
calcium in an amount of from about 0.01% to about 10% by weight of the composition;
an antioxidant vitamin in an amount of from about 0.01 % to about 1% by weight of the composition; and
water in an amount of from about 20 % to about 85% by weight of the composition, such that persons consuming the reconstituted composition obtain increased energy expenditures and increased satiety to decrease their desire for additional consumption and thereby assist in weight management of the person.

17. A weight management dry beverage mix composition according to claim 1, specifically comprising:
green tea solids in an amount of about 0.05% to about 10.0% by weight of composition;
caffeine in an amount of from about 0.01% to about 0.5% by weight of the composition;
xylitol in an amount of from about 1% to about 90% by weight of the composition, or fiber in an amount of from 1% to about 90% of the composition, or a combination thereof;
calcium in an amount of from about 0.01% to about 15% by weight of the composition;
an antioxidant vitamin in an amount of from about 0.01% to about 1% by weight of the composition; and
water in an amount of from about 1 % to about 10% by weight of the composition, such that persons consuming the reconstituted composition obtain increased energy expenditures and increased satiety to decrease their desire for additional consumption and thereby assist in weight management of the person.

18. The composition according to claim 15, wherein the antioxidant is vitamin C.

19. The composition according to claim 16, wherein the antioxidant is vitamin C.

20. The composition according to claim 17, wherein the antioxidant is vitamin C.

21. A beverage base comprising the composition according to claim 1 and coffee, juice, milk soy, wherein the base is or can be diluted to form a beverage.

22. A beverage base comprising the composition according to claim 14 and coffee, juice, milk soy, wherein the base is or can be diluted to form a beverage.

## Patentansprüche

1. Zusammensetzung eines Getränks zur Gewichtskontrolle, die ein Polyol oder einen Ballaststoff oder eine Kombination davon, Calcium sowie wenigstens eines von einem Flavanol, Stimulans und Antioxidans in zusammenwirkenden Mengen aufweist, so dass bei Personen, die die Zusammensetzung konsumieren, der Energieverbrauch erhöht wird und das Sättigungsgefühl erhöht wird, um ihren Wunsch nach zusätzlichem Verzehr zu vermindern und auf diese Weise die Gewichtskontrolle der Person zu unterstützen.

2. Zusammensetzung nach Anspruch 1, wobei das Polyol Xylit ist und in Mengen von etwa 1 bis etwa 90 Gew.-% der Zusammensetzung vorhanden ist; der Ballaststoff in einer Menge von 0,1 bis 30 g vorhanden ist; das Flavanol in einer Menge von etwa 0,01 bis etwa 0,75 Gew.-% der Zusammensetzung vorhanden ist; und das Stimulans in einer Menge von etwa 0,01 bis etwa 0,5 Gew.-% der Zusammensetzung vorhanden ist.

3. Zusammensetzung nach Anspruch 1, wobei das Antioxidans Vitamin C ist.

4. Zusammensetzung nach Anspruch 3, wobei Vitamin C in einer Menge von etwa 0,01 bis etwa 1 Gew.-% der Zusammensetzung vorhanden ist.

5. Zusammensetzung nach Anspruch 1, wobei das Flavanol als ein Bestandteil von Grüntee-Feststoffen vorhanden ist.

6. Zusammensetzung nach Anspruch 1, wobei das Flavanol Catechin, Epicatechin, Gallocatechin, Epigallocatechin, Epicatechingallat oder Epigallocatechingallat oder eine Mischung davon ist.

7. Zusammensetzung nach Anspruch 1, wobei das Stimulans Koffein ist.

8. Zusammensetzung nach Anspruch 1, wobei Calcium in einer Menge von etwa 0,01 bis etwa 15 Gew.-% der Zusammensetzung vorhanden ist.

9. Zusammensetzung nach Anspruch 1, die außerdem eines oder mehrere von Säuerungsmitteln; Färbemitteln; brennwertfreien Süßungsmitteln; Aromatisierungsmitteln oder Konservierungsmitteln aufweist.

10. Zusammensetzung nach Anspruch 9, die ein Säuerungsmittel aus Citronensäure, Phosphorsäure, Äpfelsäure, Fumarsäure, Adipinsäure, Gluconsäure, Weinsäure, Ascorbinsäure, Essigsäure, Phosphorsäure oder Mischungen davon beinhaltet sowie ein Färbemittel aus Beta-Carotin.

11. Zusammensetzung nach Anspruch 10, die eine Ansäuerungsmittelmischung aus Citronensäure und Phosphorsäure beinhaltet, die vorhanden sind in einer Menge von etwa 0,1 bis etwa 0,5% bzw. von etwa 0,01 bis etwa 0,05%; und Beta-Carotin in einer Menge von etwa 0,005 bis etwa 0,02%.

12. Zusammensetzung nach Anspruch 1, die außerdem Wasser in einer Menge von mehr als 60 bis etwa 97 Gew.-% der Zusammensetzung umfasst.

13. Zusammensetzung nach Anspruch 1 in Form eines Konzentrats, das zwischen 20 und 80% Wasser enthält, wobei ein Getränk hergestellt werden kann durch Kombinieren des Konzentrats mit einer wässrigen Flüssigkeit.

14. Zusammensetzung nach Anspruch 1 in Form einer Getränketrockenmischung oder eines agglomerierten Pulvers, die zwischen 1 und 10% Wasser enthalten, wobei ein Getränk hergestellt werden kann durch Kombinieren der Trockenmischung oder des Agglomerats mit einer wässrigen Flüssigkeit.

15. Zusammensetzung eines trinkfertigen Getränks zur Gewichtskontrolle nach Anspruch 1, die konkret umfasst:
Grünteefeststoffe in einer Menge von etwa 0,05 bis etwa 0,75 Gew.-% der Zusammensetzung;
Koffein in einer Menge von 0,01 bis etwa 0,25 Gew.-% der Zusammensetzung,
Xylit in einer Menge von etwa 1 bis etwa 15 Gew.-% der Zusammensetzung, oder Ballaststoffe in einer Menge von etwa 1 bis 3%, oder eine Kombination davon;
Calcium in einer Menge von etwa 0,01 bis etwa 1 Gew.-% der Zusammensetzung;
ein antioxidatives Vitamin in einer Menge von etwa 0,01 bis etwa 1 Gew.-% der Zusammensetzung; und
Wasser in einer Menge von etwa 20 bis etwa 97 Gew.-% der Zusammensetzung, so dass bei Personen, die die Zusammensetzung konsumieren, der Energieverbrauch erhöht wird und das Sättigungsgefühl erhöht wird, um ihren Wunsch nach zusätzlichem Verzehr zu vermindern und auf diese Weise die Gewichtskontrolle der Person zu unterstützen.

16. Zusammensetzung eines flüssigen Getränkekonzentrats zur Gewichtskontrolle nach Anspruch 1, die konkret umfasst:
Grünteefeststoffe in einer Menge von etwa 1 bis etwa 5 Gew.-% der Zusammensetzung;
Koffein in einer Menge von etwa 0,01 bis etwa 0,4 Gew.-% der Zusammensetzung,
Xylit in einer Menge von etwa 1 bis etwa 50 Gew.-% der Zusammensetzung, oder Ballaststoffe in einer Menge von etwa 1 bis etwa 20% der Zusammensetzung, oder eine Kombination davon;
Calcium in einer Menge von etwa 0,01 bis etwa 10 Gew.-% der Zusammensetzung;
ein antioxidatives Vitamin in einer Menge von etwa 0,01 bis etwa 1 Gew.-% der Zusammensetzung; und
Wasser in einer Menge von etwa 20 bis etwa 85 Gew.-% der Zusammensetzung, so dass bei Personen, die die rekonstituierte Zusammensetzung konsumieren, der Energieverbrauch erhöht wird und das Sättigungsgefühl erhöht wird, um ihren Wunsch nach zusätzlichem Verzehr zu vermindern und auf diese Weise die Gewichtskontrolle der Person zu unterstützen.

17. Zusammensetzung einer trockenen Getränkemischung zur Gewichtskontrolle nach Anspruch 1, die konkret umfasst:
Grünteefeststoffe in einer Menge von etwa 0,05 bis etwa 10 Gew.-% der Zusammensetzung;
Koffein in einer Menge von etwa 0,01 bis etwa 0,5 Gew.-% der Zusammensetzung;
Xylit in einer Menge von etwa 1 bis etwa 90 Gew.-% der Zusammensetzung, oder Ballaststoffe in einer Menge von 1 bis etwa 90% der Zusammensetzung, oder eine Kombination davon;
Calcium in einer Menge von etwa 0,01 bis etwa 15 Gew.-% der Zusammensetzung;
ein antioxidatives Vitamin in einer Menge von etwa 0,01 bis etwa 1 Gew.-% der Zusammensetzung; und
Wasser in einer Menge von etwa 1 bis etwa 10 Gew.-% der Zusammensetzung, so dass bei Personen, die die rekonstituierte Zusammensetzung konsumieren, der Energieverbrauch erhöht wird und das Sättigungsgefühl erhöht wird, um ihren Wunsch nach zusätzlichem Verzehr zu vermindern und auf diese Weise die Gewichtskontrolle der Person zu unterstützen.

18. Zusammensetzung nach Anspruch 15, wobei das Antioxidans Vitamin C ist.

19. Zusammensetzung nach Anspruch 16, wobei das Antioxidans Vitamin C ist.

20. Zusammensetzung nach Anspruch 17, wobei das Antioxidans Vitamin C ist.

21. Getränkebasis, die die Zusammensetzung nach Anspruch 1 sowie Kaffee, Saft, Sojamilch umfasst, wobei die Basis unter Bildung eines Getränks verdünnt ist oder verdünnt werden kann.

22. Getränkebasis, die die Zusammensetzung nach Anspruch 14 sowie Kaffee, Saft, Sojamilch umfasst, wobei die Basis unter Bildung eines Getränks verdünnt ist oder verdünnt werden kann.

## Revendications

1. Composition de boisson pour la gestion du poids, comprenant un polyol ou une fibre ou une association d'entre eux, du calcium et au moins un de chacun d'un flavanol, d'un stimulant et d'un antioxydant, en des quantités qui coopèrent en sorte que les personnes consommant la composition subissent des dépenses d'énergie accrues et atteignent une plus grande satiété pour réduire leur envie de consommer davantage et aider ainsi à la gestion du poids de la personne.

2. Composition selon la revendication 1, dans laquelle le polyol est le xylitol présent en une quantité d'environ 1 % à environ 90 % de la composition ; la fibre est présente en une quantité de 0,1 à 30 g ; le flavanol est présent en une quantité d'environ 0,01 % à environ 0,75 % en poids de la composition ; et le stimulant est présent en une quantité d'environ 0,01 % à environ 0,5 % en poids de la composition.

3. Composition selon la revendication 1, dans laquelle l'antioxydant est la vitamine C.

4. Composition selon la revendication 3, dans laquelle la vitamine C est présente en une quantité d'environ 0,01 % à environ 1 % en poids de la composition.

5. Composition selon la revendication 1, dans laquelle le flavanol est présent sous forme d'un composant de la matière sèche de thé vert.

6. Composition selon la revendication 1, dans laquelle le flavanol est la catéchine, l'épicatéchine, la gallocatéchine, l'épigallocatéchine, le gallate d'épicatéchine ou le gallate d'épigallocatéchine, ou un mélange d'entre eux.

7. Composition selon la revendication 1, dans laquelle le stimulant est la caféine.

8. Composition selon la revendication 1, dans laquelle le calcium est présent en une quantité d'environ 0,01 % à environ 15 % en poids de la composition.

9. Composition selon la revendication 1, comprenant de plus un ou plusieurs agents acidulants ; agents colorants ; édulcorants non caloriques ; agents aromatisants ; ou conservateurs.

10. Composition selon la revendication 9, qui comprend de l'acide citrique, de l'acide phosphorique, de l'acide malique, de l'acide fumarique, de l'acide adipique, de l'acide gluconique, de l'acide tartrique, de l'acide ascorbique, de l'acide acétique, de l'acide phosphorique ou des mélanges d'entre eux comme agent acidulant ; et du bêta-carotène comme agent colorant.

11. Composition selon la revendication 10, qui comprend un mélange d'agents acidulants constitué d'acide citrique et d'acide phosphorique qui sont présents en des quantités respectives d'environ 0,1 % à environ 0,5 % et d'environ 0,01 % à environ 0,05 % ; et du bêta-carotène présent en une quantité d'environ 0,005 % à environ 0,02 %.

12. Composition selon la revendication 1, comprenant de plus de l'eau en une quantité de plus de 60 % à environ 97 % en poids de la composition.

13. Composition selon la revendication 1, sous la forme d'un concentré qui contient entre 20 % et 80 % d'eau, au moyen de laquelle une boisson peut être préparée en associant le concentré avec un fluide aqueux.

14. Composition selon la revendication 1, sous la forme d'un mélange sec de boisson ou d'une poudre agglomérée qui contient entre 1 et 10 % d'eau, au moyen de laquelle une boisson peut être préparée en associant le mélange sec ou le produit aggloméré avec un fluide aqueux.

15. Composition de boisson prête à boire pour la gestion du poids selon la revendication 1, comprenant spécifiquement :
de la matière sèche de thé vert en une quantité d'environ 0,05 % à environ 0,75 % en poids de la composition ;
de la caféine en une quantité d'environ 0,01 % à environ 0,25 % en poids de la composition ;
du xylitol en une quantité d'environ 1 % à environ 15 % en poids de la composition, ou une fibre en une quantité de 1 % à 3 %, ou une association d'entre eux ;
du calcium en une quantité d'environ 0,01 % à environ 1 % en poids de la composition ;
une vitamine antioxydante en une quantité d'environ 0,01 % à environ 1 % en poids de la composition ; et
de l'eau en une quantité d'environ 20 % à environ 97 % en poids de la composition,
en sorte que les personnes consommant la composition subissent des dépenses d'énergie accrues et atteignent une plus grande satiété pour réduire leur envie de consommer davantage et aider ainsi à la gestion du poids de la personne.

16. Composition de concentré liquide de boisson pour la gestion du poids selon la revendication 1, comprenant spécifiquement :
de la matière sèche de thé vert en une quantité d'environ 1 % à environ 5 % en poids de la composition ;
de la caféine en une quantité d'environ 0,01 % à environ 0,4 % en poids de la composition ;
du xylitol en une quantité d'environ 1 % à environ 50 % en poids de la composition, ou une fibre en une quantité d'environ 1 % à 20 % de la composition, ou une association d'entre eux ;
du calcium en une quantité d'environ 0,01 % à environ 10 % en poids de la composition ;
une vitamine antioxydante en une quantité d'environ 0,01 % à environ 1 % en poids de la composition ; et
de l'eau en une quantité d'environ 20 % à environ 85 % en poids de la composition,
en sorte que les personnes consommant la composition reconstituée subissent des dépenses d'énergie accrues et atteignent une plus grande satiété pour réduire leur envie de consommer davantage et aider ainsi à la gestion du poids de la personne.

17. Composition de mélange sec de boisson pour la gestion du poids selon la revendication 1, comprenant spécifiquement :
de la matière sèche de thé vert en une quantité d'environ 0,05 % à environ 10,0 % en poids de la composition ;
de la caféine en une quantité d'environ 0,01 % à environ 0,5 % en poids de la composition ;
du xylitol en une quantité d'environ 1 % à environ 90 % en poids de la composition, ou une fibre en une quantité de 1 % à environ 90 % de la composition, ou une association d'entre eux ;
du calcium en une quantité d'environ 0,01 % à environ 15 % en poids de la composition ;
une vitamine antioxydante en une quantité d'environ 0,01 % à environ 1 % en poids de la composition ; et
de l'eau en une quantité d'environ 1 % à environ 10 % en poids de la composition,
en sorte que les personnes consommant la composition reconstituée subissent des dépenses d'énergie accrues et atteignent une plus grande satiété pour réduire leur envie de consommer davantage et aider ainsi à la gestion du poids de la personne.

18. Composition selon la revendication 15, dans laquelle l'antioxydant est la vitamine C.

19. Composition selon la revendication 16, dans laquelle l'antioxydant est la vitamine C.

20. Composition selon la revendication 17, dans laquelle l'antioxydant est la vitamine C.

21. Base de boisson comprenant la composition selon la revendication 1 et du café, du jus, du lait de soja, dans laquelle la base est ou peut être diluée pour former une boisson.

22. Base de boisson comprenant la composition selon la revendication 14 et du café, du jus, du lait de soja, dans laquelle la base est ou peut être diluée pour former une boisson.
